(19) Europäisches Patentamt
European Patent Office
Office européen des brevets

(11) **EP 4 108 809 A1**

(12) **EUROPEAN PATENT APPLICATION**

(43) Date of publication:
**28.12.2022 Bulletin 2022/52**

(21) Application number: **22176699.1**

(22) Date of filing: **01.06.2022**

(51) International Patent Classification (IPC):
*C25B 1/04* (2021.01)     *C25B 9/23* (2021.01)
*C25B 9/77* (2021.01)     *C25B 11/031* (2021.01)
*C25B 11/047* (2021.01)     *H01M 4/86* (2006.01)
*H01M 8/12* (2016.01)     *H01M 8/2432* (2016.01)
*H01M 4/88* (2006.01)

(52) Cooperative Patent Classification (CPC):
**H01M 8/12; C25B 1/04; C25B 9/23; C25B 9/77;
C25B 11/052; C25B 11/091; H01M 4/8621;
H01M 4/8652; H01M 4/8657; H01M 8/2432;
H01M 4/8885; H01M 2004/8684; H01M 2008/1293**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.06.2021 JP 2021095732
18.05.2022 JP 2022081464**

(71) Applicant: **Toshiba Energy Systems & Solutions
Corporation
Saiwai-ku
Kawasaki-shi
Kanagawa 2120013 (JP)**

(72) Inventors:
• **OSADA, Norikazu
Kawasaki-shi, Kanagawa (JP)**
• **KAMEDA, Tsuneji
Kawasaki-shi, Kanagawa (JP)**

(74) Representative: **Hoffmann Eitle
Patent- und Rechtsanwälte PartmbB
Arabellastraße 30
81925 München (DE)**

(54) **ELECTROCHEMICAL CELL AND ELECTROCHEMICAL CELL STACK**

(57)     A hydrogen electrode includes: a first layer; and a second layer located on the side of the electrolyte membrane relative to the first layer. The first layer is formed of a sintered body of a first metal and a first oxide. The second layer is formed of a sintered body of a second metal and a second oxide different from the first oxide. The first metal and the second metal each are a single metal of at least one element selected from the group consisting of Fe, Co, Ni, and Cu or an alloy of the element. The first oxide is zirconia stabilized with an oxide of at least one element selected from the group consisting of Y, Sc, Ca, and Mg. The second oxide is ceria doped with an oxide of at least one element selected from the group consisting of Sm, Gd, and Y.

EP 4 108 809 A1

**Description**

FIELD

The embodiment of the present invention relates to an electrochemical cell and an electrochemical cell stack.

BACKGROUND

An electrochemical cell consists of a hydrogen electrode and an oxygen electrode sandwiching an electrolyte membrane. A plurality of the electrochemical cells are stacked to configure an electrochemical cell stack.

Among the electrochemical cells, a solid-oxide electrochemical cell using a solid oxide for an electrolyte membrane has attracted attention because its reaction rate is sufficiently high without using an expensive precious metal catalyst.

The solid-oxide electrochemical cell can be used as a solid-oxide fuel cell (SOFC; Solid Oxide Fuel Cell) or a solid-oxide electrolysis cell (SOEC; Solid Oxide Electrolysis Cell).

When the solid-oxide electrochemical cell is used as a SOFC, for example, hydrogen supplied to the hydrogen electrode and oxygen supplied to the oxygen electrode react with each other through the electrolyte membrane under high temperature conditions, and thereby electric energy is obtained. The SOFC is expected to be a clean next-generation power generation system because of having high power generation efficiency and low $CO_2$ emissions.

In contrast to this, when the solid-oxide electrochemical cell is used as a SOEC, for example, hydrogen is generated at the hydrogen electrode and oxygen is generated at the oxygen electrode by electrolysis of water (water vapor) under high temperature conditions. The SOEC can produce hydrogen at a low electrolytic voltage in principle due to a high operating temperature, and thus the hydrogen production efficiency is high.

Further, the solid-oxide electrochemical cell is being considered for use as a power storage system because it functions as both the SOFC and the SOEC.

The above-described electrochemical cell includes a support layer to maintain the form of the electrochemical cell. Generally, the hydrogen electrode includes the support layer, and an active layer is often stacked on the support layer. In the hydrogen electrode, the active layer needs to have sufficient reaction activity. In contrast to this, in the hydrogen electrode, the support layer needs to be strong enough to maintain the form of the electrochemical cell, and also preferably has high porosity to enhance gas diffusibility.

However, when the porosity of the support layer is increased, the strength of the support layer decreases. When the porosity of the support layer is reduced, the strength of the support layer improves, but the gas diffusivity decreases.

Under the above-described circumstances, it is difficult to sufficiently improve mechanical reliability in the electrochemical cell while maintaining the performance of the electrochemical cell.

A problem to be solved by the present invention is to provide an electrochemical cell and an electrochemical cell stack that are capable of sufficiently improving mechanical reliability.

BRIEF DESCRIPTION OF THE DRAWINGS

FIG. 1 is a cross-sectional view schematically illustrating an entire configuration of an electrochemical cell stack 200 in an embodiment.

FIG. 2 is a cross-sectional view illustrating a structure of an electrochemical cell 1 according to the embodiment.

FIG. 3A is a cross-sectional view illustrating a manufacturing process that manufactures the electrochemical cell 1 according to the embodiment.

FIG. 3B is a cross-sectional view illustrating a manufacturing process that manufactures the electrochemical cell 1 according to the embodiment.

FIG. 3C is a cross-sectional view illustrating a manufacturing process that manufactures the electrochemical cell 1 according to the embodiment.

FIG. 3D is a cross-sectional view illustrating a manufacturing process that manufactures the electrochemical cell 1 according to the embodiment.

DETAILED DESCRIPTION

An electrochemical cell in an embodiment includes: a hydrogen electrode; an oxygen electrode; and an electrolyte membrane, the electrolyte membrane interposed between the hydrogen electrode and the oxygen electrode. The hydrogen electrode includes at least a first hydrogen electrode layer and a second hydrogen electrode layer located on the side of the electrolyte membrane relative to the first hydrogen electrode layer. The first hydrogen electrode layer is formed of a sintered body of a first metal and a first oxide. The second hydrogen electrode layer is formed of a sintered body of a second metal and a second oxide different from the first oxide. The first metal and the second metal each are a single metal of at least one element selected from the group consisting of Fe, Co, Ni, and Cu or an alloy of the element. The first oxide is zirconia stabilized with an oxide of at least one element selected from the group consisting of Y, Sc, Ca, and Mg. The second oxide is ceria doped with an oxide of at least one element selected from the group consisting of Sm, Gd, and Y.

Hereinafter, there is explained an embodiment using the drawings. The drawings referred to in the following description are schematic views, and the dimensions of each part do not necessarily correspond to the actual one.

[A] Structure of an electrochemical cell stack

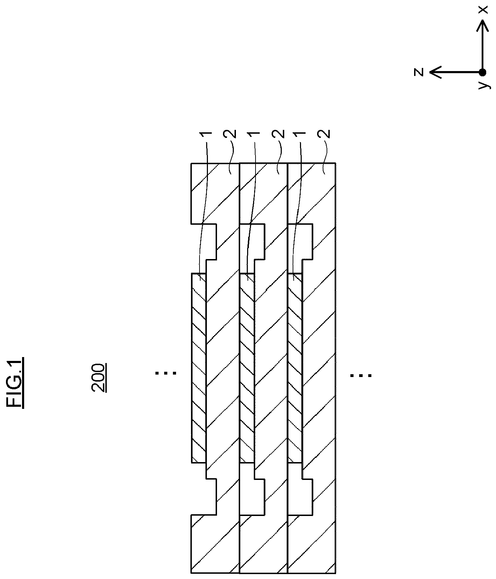

FIG. 1 is a cross-sectional view schematically illustrating an entire configuration of an electrochemical cell stack 200 in the embodiment.

The electrochemical cell stack 200 includes a plurality of electrochemical cells 1 and a plurality of separators 2, in which the electrochemical cells 1 and the separators 2 are stacked alternately in a stacking direction. The electrochemical cell stack 200 is interposed between a pair of end plates (not illustrated) in the stacking direction and is fastened between a pair of the end plates using a fastening member such as a tie rod or band (not illustrated).

[B] Structure of the electrochemical cell 1

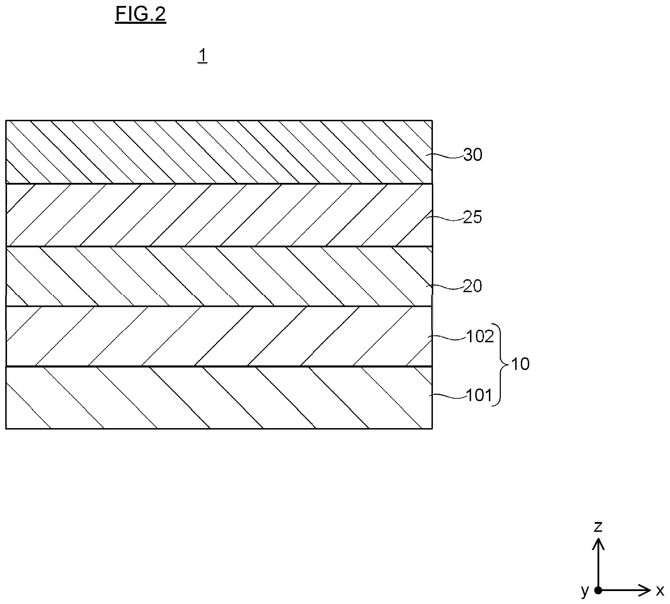

FIG. 2 is a cross-sectional view illustrating a structure of the electrochemical cell 1 according to the embodiment.

As illustrated in FIG. 2, the electrochemical cell 1 includes a hydrogen electrode 10, an electrolyte membrane 20, and an oxygen electrode 30. The electrochemical cell 1 is, for example, a planar type solid-oxide electrochemical cell. Further, the electrochemical cell 1 is a hydrogen electrode support type. Respective parts configuring the electrochemical cell 1 are explained sequentially.

[B-1] Hydrogen electrode 10

In the electrochemical cell 1, the hydrogen electrode 10 includes, as illustrated in FIG. 2, a first hydrogen electrode layer 101 and a second hydrogen electrode layer 102, and on the upper surface of the first hydrogen electrode layer 101, the second hydrogen electrode layer 102 is provided.

[B-1-1] First hydrogen electrode layer 101

In the hydrogen electrode 10, the first hydrogen electrode layer 101 is formed, for example, to function as a support layer. The first hydrogen electrode layer 101 is the layer located on the most surface side in the electrochemical cell 1.

The first hydrogen electrode layer 101 is a porous body and is formed of a sintered body of a first metal and a first oxide.

Specifically, in the first hydrogen electrode layer 101, the first metal is a single metal of at least one element selected from the group consisting of Fe, Co, Ni, and Cu or an alloy of the element. Further, in the first hydrogen electrode layer 101, the first oxide is zirconia stabilized with an oxide ($Y_2O_3$, $Sc_2O_3$, CaO, or MgO) of at least one element selected from the group consisting of Y, Sc, Ca, and Mg. In the sintered body forming the first hydrogen electrode layer 101, the first metal is solid-dissolved in the first oxide.

[B-1-2] Second hydrogen electrode layer 102

In the hydrogen electrode 10, the second hydrogen electrode layer 102 is formed, for example, to function as an active layer. The second hydrogen electrode layer 102 is a porous body and is located on the side of the electrolyte membrane 20 relative to the first hydrogen electrode layer 101. That is, the second hydrogen electrode layer 102 is interposed between the first hydrogen electrode layer 101 and the electrolyte membrane 20.

The second hydrogen electrode layer 102 is formed of a sintered body of a second metal and a second oxide different from the first oxide forming the first hydrogen electrode layer 101.

Specifically, in the second hydrogen electrode layer 102, the second metal is a single metal of at least one element selected from the group consisting of Fe, Co, Ni, and Cu or an alloy of the element. The second metal forming the second hydrogen electrode layer 102 may be the same as or different from the first metal forming the first hydrogen electrode layer 101. Further, in the second hydrogen electrode layer 102, the second oxide is ceria ($CeO_2$) doped with an oxide ($Sm_2O_3$, $Gd_2O_3$, or $Y_2O_3$) of at least one element selected from the group consisting of Sm, Gd, and Y. In the sintered body forming the second hydrogen electrode layer 102, the second metal is solid-dissolved in the second oxide.

Relationship between a thickness T1 of the first hydrogen electrode layer 101 and a thickness T2 of the second hydrogen electrode layer 102

In the hydrogen electrode 10, a thickness T1 of the first hydrogen electrode layer 101 and a thickness T2 of the second hydrogen electrode layer 102 preferably satisfy the relationship illustrated in (Expression A) below

$$0.05 \leq T2/T1 \leq 0.15 \quad ...(\text{Expression A})$$

[B-2] Electrolyte membrane 20

In the electrochemical cell 1, the electrolyte membrane 20 is sandwiched between the hydrogen electrode 10 and the oxygen electrode 30. Here, the electrolyte membrane 20 is a dense layer with a porosity lower than that of the hydrogen electrode 10 and the oxygen electrode 30, and is stacked on the upper surface of the hydrogen electrode 10. The electrolyte membrane 20 is formed of a sintered body of a solid oxide.

Specifically, the electrolyte membrane 20 is formed using zirconia stabilized with an oxide ($Y_2O_3$, $Sc_2O_3$, $Yb_2O_3$, $Gd_2O_3$, CaO, MgO, or $CeO_2$) of at least one element selected from the group consisting of Y, Sc, Yb, Gd, Ca, Mg, and Ce, for example. Besides, the electrolyte membrane 20 may be formed using ceria doped with an oxide ($Sm_2O_3$, $Gd_2O_3$, or $Y_2O_3$) of at least one element selected from the group consisting of Sm, Gd, and Y, for example.

[B-3] Oxygen electrode 30

In the electrochemical cell 1, the oxygen electrode 30 is a porous body and is provided on the upper surface side of the electrolyte membrane 20. The oxygen electrode 30 is formed of a sintered body containing a perovskite oxide. The perovskite oxide is mainly represented by a chemical formula $Ln_{1-x}A_xB_{1-y}C_yCb_{3-\delta}$. In the chemical formula, Ln is a rare-earth element such as La, for example. A is, for example, Sr, Ca, Ba, or the like. B and C are, for example, Cr, Mn, Co, Fe, Ni, and so on. In the chemical formula, x, y, and $\delta$ satisfy the relationships illustrated in the following expressions.

$$0 \leq x \leq 1$$

$$0 \leq y \leq 1$$

$$0 \leq \delta \leq 1$$

In addition to the above, the oxygen electrode 30 may contain ceria doped with at least one oxide selected from the group consisting of $Sm_2O_3$, $Gd_2O_3$, $Y_2O_3$, and so on.

[B-4] Reaction preventing layer 25

The electrochemical cell 1 in this embodiment further includes a reaction preventing layer 25 as illustrated in FIG. 2. The reaction preventing layer 25 is interposed between the electrolyte membrane 20 and the oxygen electrode 30 to prevent the electrolyte membrane 20 and the oxygen electrode 30 from directly coming into contact with each other.

The reaction preventing layer 25 is formed of a sintered body of a solid oxide.

Specifically, the reaction preventing layer 25 is formed using zirconia stabilized with an oxide ($Y_2O_3$, $Sc_2O_3$, $Yb_2O_3$, $Gd_2O_3$, CaO, MgO, or $CeO_2$) of at least one element selected from the group consisting of Y, Sc, Yb, Gd, Ca, Mg, and Ce, for example. In addition to this, the reaction preventing layer 25 may be formed using ceria doped with an oxide ($Sm_2O_3$, $Gd_2O_3$, or $Y_2O_3$) of at least one element selected from the group consisting of Sm, Gd, and Y, for example.

[C] Manufacturing method of the electrochemical cell 1

There is explained one example of manufacturing processes of the above-described electrochemical cell 1.

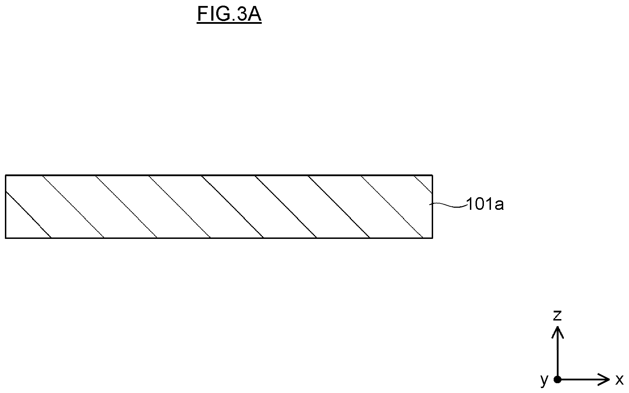

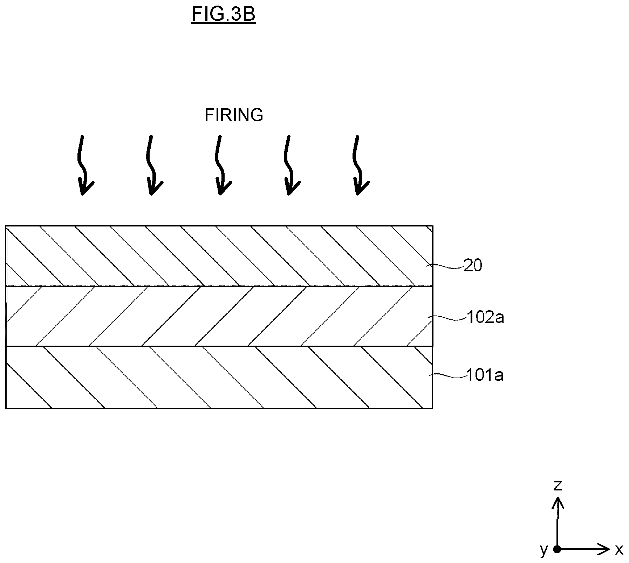

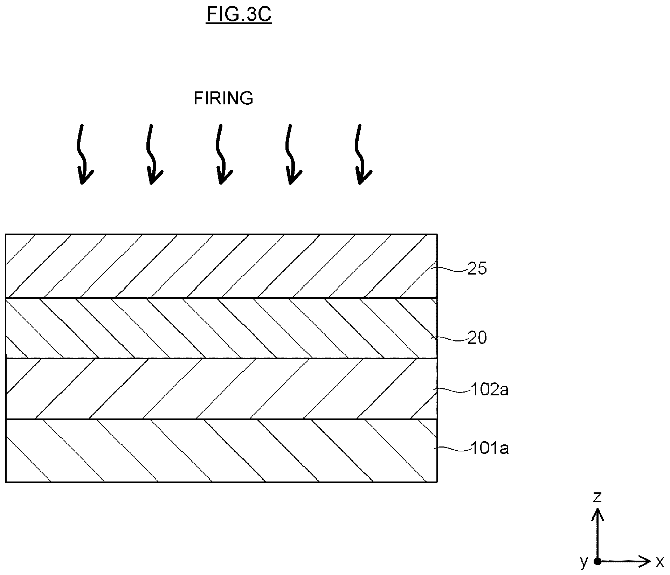

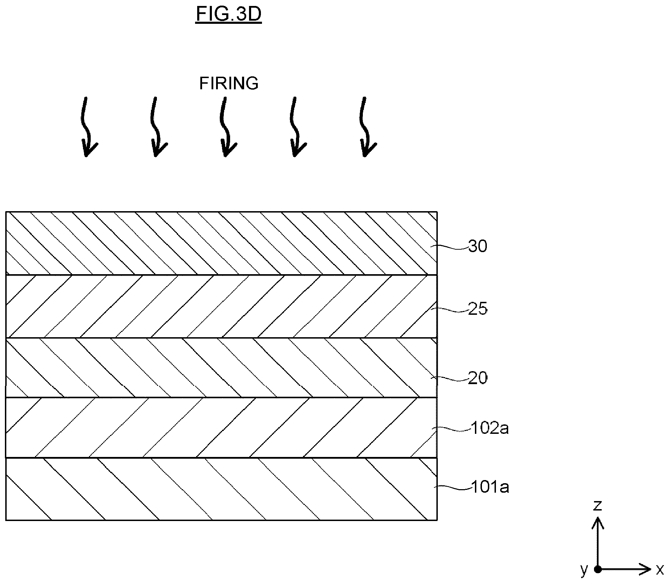

FIG. 3A, FIG. 3B, FIG. 3C, and FIG. 3D are cross-sectional views illustrating the manufacturing processes that manufacture the electrochemical cell 1 according to the embodiment. FIG. 3A, FIG. 3B, FIG. 3C, and FIG. 3D each illustrate the same cross section as in FIG. 2.

[C-1] Formation of a first hydrogen electrode layer precursor 101a

When manufacturing the electrochemical cell 1, as illustrated in FIG. 3A, a first hydrogen electrode layer precursor 101a is first formed.

The first hydrogen electrode layer precursor 101a is a preliminary layer for forming the first hydrogen electrode layer 101. In the formation of the first hydrogen electrode layer precursor 101a, a paste is prepared that contains a powder made of an oxide of a metal forming the first metal in the first hydrogen electrode layer 101 and a powder of an oxide forming the first oxide in the first hydrogen electrode layer 101. In the preparation of the paste, a binder such as resin and a solvent that dissolves the binder, and so on are used.

Then, the first hydrogen electrode layer precursor 101a is formed by forming a sheet-shaped formed body using the prepared paste. The formation of the first hydrogen electrode layer precursor 101a is performed by forming a film of the paste to have a uniform thickness by a doctor blade method, for example.

[C-2] Formations of a second hydrogen electrode layer precursor 102a and the electrolyte membrane 20

Then, as illustrated in FIG. 3B, formation of a second hydrogen electrode layer precursor 102a and formation of the electrolyte membrane 20 are performed.

The second hydrogen electrode layer precursor 102a is a preliminary layer for forming the second hydrogen electrode layer 102. In the formation of the second hydrogen electrode layer precursor 102a, a paste is prepared that contains a powder made of an oxide of a metal forming the second metal in the second hydrogen electrode layer 102 and a powder of an oxide forming the second oxide in the second hydrogen electrode layer 102 in the same manner as the formation of the first hydrogen electrode layer 101. Then, the formation of the second hydrogen electrode layer precursor 102a is performed by forming a sheet-shaped formed body on the upper surface of the first hydrogen electrode layer precursor 101a using the prepared paste.

In the formation of the electrolyte membrane 20, a paste is prepared that contains a powder of a material forming the electrolyte membrane 20. Then, the formation of the electrolyte membrane 20 is performed by forming a sheet-shaped formed body on the upper surface of the second hydrogen electrode layer precursor 102a using the prepared paste.

Thereafter, firing is performed on a stack of the first hydrogen electrode layer precursor 101a, the second hydrogen electrode layer precursor 102a, and the electrolyte membrane 20. The firing is performed under conditions such that the internal strength of each layer and the strength between layers become sufficient.

[C-3] Formation of the reaction preventing layer 25

Then, as illustrated in FIG. 3C, formation of the reaction preventing layer 25 is performed.

Here, a paste is prepared that contains a powder of a material forming the reaction preventing layer 25. Then, the formation of the reaction preventing layer 25 is performed by forming a sheet-shaped formed body on the upper surface of the electrolyte membrane 20 using the prepared paste.

Thereafter, firing is performed on a stack of the first hydrogen electrode layer precursor 101a, the second hydrogen electrode layer precursor 102a, the electrolyte membrane 20, and the reaction preventing layer 25. Similarly to the above, the firing is performed under conditions such that the internal strength of each layer and the strength between layers become sufficient.

[C-4] Formation of the oxygen electrode 30

Then, as illustrated in FIG. 3D, formation of the oxygen electrode 30 is performed.

Here, for example, the oxygen electrode 30 is formed on the upper surface of the reaction preventing layer 25 by screen printing.

Thereafter, firing is performed on a stack of the first hydrogen electrode layer precursor 101a, the second hydrogen electrode layer precursor 102a, the electrolyte membrane 20, the reaction preventing layer 25, and the oxygen electrode 30. Similarly to the above, the firing is performed under conditions such that the internal strength of each layer and the strength between layers become sufficient.

Then, there is performed a process to reduce the oxide of the metal forming the first metal in the first hydrogen electrode layer precursor 101a and the oxide of the metal forming the second metal in the second hydrogen electrode layer precursor 102a. The oxide of the metal forming the first metal in the first hydrogen electrode layer precursor 101a becomes the metal forming the first metal. Similarly, the oxide of the metal forming the second metal in the second hydrogen electrode layer precursor 102a becomes the metal forming the second metal. Thereby, the first hydrogen electrode layer 101, which is formed of the sintered body of the first metal and the first oxide, is formed of the first hydrogen electrode layer precursor 101a. At the same time, the second hydrogen electrode layer 102, which is formed of the sintered body of the second metal and the second oxide, is formed of the second hydrogen electrode layer precursor 102a.

Besides the above-described manufacturing method, the electrochemical cell 1 may also be formed by forming a laminate of the respective layers by thermocompression bonding, for example.

[D] Example

Hereinafter, there are explained examples and so on of the above-described embodiment using Table 1. In Table 1, Example 1 to Example 11 are examples and Example C1 and Example C2 are comparative examples.

[Table 1]

| | Configuration | | | | | | | | | Test result | | | |
|---|---|---|---|---|---|---|---|---|---|---|---|---|---|
| | Hydrogen electrode 10 | | | | | | | Electrolyte membrane 20 | Reaction preventing layer 25 | Initial I-V characteristic | Porosity (%) | Fracture strength (MPa) | Young's modulus (Mpa) |
| | First hydrogen electrode layer 101 | | | Second hydrogen electrode layer 102 | | | Thickness ratio T2/T1 | | | | | | |
| | Material | | Thickness T1 (μm) | Material | | Thickness T2 (μm) | | | | | | | |
| | First metal part | First oxide part | | Second metal part | Second oxide part | | | Material | Material | Current density (A cm⁻²) | | | |
| Example 1 | Ni | YSZ | 400 | Ni | GDC | 60 | 0.15 | YSZ | GDC | 0.95 | 42 | 150 | 7500 |
| Example 2 | Ni | ScSZ | 400 | Ni | GDC | 60 | 0.15 | ScSZ | GDC | 0.98 | 45 | 150 | 7000 |
| Example 3 | Ni | ScSZ | 400 | Ni | GDC | 60 | 0.15 | YSZ | GDC | 0.94 | 45 | 150 | 7000 |
| Example 4 | Ni | YSZ | 400 | Ni | SDC | 60 | 0.15 | YSZ | SDC | 0.94 | 45 | 150 | 7000 |
| Example 5 | Ni | YSZ | 400 | Ni | YDC | 60 | 0.15 | YSZ | SDC | 0.9 | 43 | 150 | 7000 |
| Example 6 | Cu | YSZ | 400 | Ni | GDC | 60 | 0.15 | YSZ | SDC | 0.92 | 43 | 150 | 6800 |
| Example 7 | Ni | CSZ | 400 | Ni | GDC | 60 | 0.15 | YSZ | SDC | 0.93 | 45 | 150 | 7500 |
| Example 8 | Ni | YSZ | 400 | Ni | GDC | 100 | 0.25 | YSZ | SDC | 0.95 | 45 | 150 | 7000 |
| Example 9 | Ni | YSZ | 400 | Ni | GDC | 20 | 0.05 | YSZ | SDC | 0.93 | 45 | 150 | 6800 |
| Example 10 | Ni | YSZ | 400 | Ni | GDC | 15 | 0.0375 | YSZ | SDC | 0.85 | 45 | 150 | 6500 |
| Example 11 | Ni | YSZ | 400 | Ni | GDC | 120 | 0.3 | YSZ | SDC | 0.8 | 42 | 150 | 7500 |
| Example C1 | Ni | GDC | 400 | Ni | GDC | 60 | 0.15 | YSZ | GDC | 0.96 | 43 | 100 | 5000 |
| Example C2 | Ni | YSZ | 400 | Ni | YSZ | 60 | 0.15 | YSZ | GDC | 0.8 | 44 | 110 | 5500 |

[D-1] Sample fabrication

Fabrications of the respective examples are explained.

[Example 1]

(1) Formation of the first hydrogen electrode layer precursor 101a

In Example 1, formation of the first hydrogen electrode layer precursor 101a was first performed (see FIG. 3A).

Here, in order to form the first hydrogen electrode layer precursor 101a, as illustrated in Table 1, there was prepared a paste containing a powder of an oxide (NiO) of a metal (Ni) forming the first metal and a powder of an oxide (YSZ) forming the first oxide. The paste was prepared by mixing the respective powders at the following mixing ratio.

- Nickel oxide (NiO) ... 60 parts by weight
- Yttria (Y$_2$O$_3$) stabilized zirconia (YSZ; a composition of (Y$_2$O$_3$)$_{0.08}$(ZrO$_2$)$_{0.92}$) ... 40 parts by weight

Then, a sheet-shaped formed body was formed using the prepared paste, and thereby the first hydrogen electrode layer precursor 101a was formed. Here, as illustrated in Table 1, a film of the first hydrogen electrode layer precursor 101a was formed to achieve a thickness of 400 μm, which is the thickness T1 of the first hydrogen electrode layer 101.

(2) Formation of the second hydrogen electrode layer precursor 102a and formation of the electrolyte membrane 20

Then, formation of the second hydrogen electrode layer precursor 102a and formation of the electrolyte membrane 20 were performed (see FIG. 3B).
Here, in order to form the second hydrogen electrode layer precursor 102a, as illustrated in Table 1, there was prepared a paste containing a powder of an oxide (NiO) of a metal (Ni) forming the second metal and a powder of an oxide (GDC) forming the second oxide. The paste was prepared by mixing the respective powders at the following mixing ratio.

- Nickel oxide (NiO) ... 60 wt.%
- Gd$_2$O$_3$-doped ceria (GDC; a composition of (Gd$_2$O$_3$)$_{0.1}$(CeO$_2$)$_{0.9}$) ...40 wt.%

Then, a sheet-shaped formed body was formed using the prepared paste, and thereby the second hydrogen electrode layer precursor 102a was formed. Here, as illustrated in Table 1, a film of the second hydrogen electrode layer precursor 102a was formed to achieve a thickness of 60 μm, which is the thickness T2 of the second hydrogen electrode layer 102.
Thereafter, in order to form the electrolyte membrane 20, as illustrated in Table 1, there was prepared a paste containing a powder of a material (YSZ; yttria-stabilized zirconia (a composition of (Y$_2$O$_3$)$_{0.08}$(ZrO$_2$)$_{0.92}$)) to form the electrolyte membrane 20. Then, the formation of the electrolyte membrane 20 was performed by forming a film of the paste on the upper surface of the second hydrogen electrode layer precursor 102a. In this example, the electrolyte membrane 20 was formed to achieve a thickness of about 5 μm.
Then, firing was performed on a stack of the first hydrogen electrode layer precursor 101a, the second hydrogen electrode layer precursor 102a, and the electrolyte membrane 20. Here, the firing was performed under the condition of 1200°C or higher and 1600°C or lower until the internal strength of each layer and the strength between respective layers became sufficient.

(3) Formation of the reaction preventing layer 25

Then, formation of the reaction preventing layer 25 was performed (see FIG. 3C).
Here, there was prepared a paste containing a powder of a material (GDC: Gd$_2$O$_3$-doped ceria) to form the reaction preventing layer 25. Then, a sheet-shaped formed body was formed on the upper surface of the electrolyte membrane 20 using the prepared paste, and thereby the formation of the reaction preventing layer 25 was performed. In this example, the reaction preventing layer 25 was formed to achieve a thickness of about 3 μm.
Thereafter, firing was performed on a stack of the first hydrogen electrode layer precursor 101a, the second hydrogen electrode layer precursor 102a, the electrolyte membrane 20, and the reaction preventing layer 25. Here, the firing was performed under the condition of 1100°C or higher and 1500°C or lower until the internal strength of each layer and the strength between respective layers became sufficient.

(4) Formation of the oxygen electrode 30

Then, formation of the oxygen electrode 30 was performed (see FIG. 3D).
Here, the oxygen electrode 30 of LSCF (lanthanum • strontium • cobalt • ferrite) having a composition of La$_{0.6}$(Sr)$_{0.4}$Co$_{0.2}$(Fe)$_{0.8}$O$_{3-\delta}$ was formed on the upper surface of the reaction preventing layer 25. In this example, the oxygen electrode 30 was formed to achieve a thickness of about 30 μm.
Thereafter, firing was performed on a stack of the first hydrogen electrode layer precursor 101a, the second hydrogen electrode layer precursor 102a, the electrolyte membrane 20, the reaction preventing layer 25, and the oxygen electrode 30. Here, the firing was performed under the condition of 900°C or higher and 1200°C or lower.
Then, there was performed a reduction process to reduce the oxide (NiO) of the metal (Ni) forming the first metal in the first hydrogen electrode layer precursor 101a and the oxide (NiO) of the metal (Ni) forming the second metal in the second hydrogen electrode layer precursor 102a of the stack burned as described above.

Here, the reduction process was performed using an output characteristic evaluation device for evaluating output characteristics such as a later-described I-V characteristic. Specifically, the above-described stack was installed in an output characteristic evaluation device, and dry hydrogen was made to flow to the side of the hydrogen electrode 10 and air (or a mixture gas of an air composition) was made to flow to the side of the oxygen electrode 30 under the condition of 700°C or higher.

Thereby, as illustrated in Table 1, the electrochemical cell 1 in Example 1 was completed, including the first hydrogen electrode layer 101 formed of the sintered body of the first metal (Ni) and the first oxide (YSZ) and the second hydrogen electrode layer 102 formed of the sintered body of the second metal (Ni) and the second oxide (GDC).

[Example 2]

In Example 2, as illustrated in Table 1, unlike Example 1, in the first hydrogen electrode layer 101, the first oxide is formed of $Sc_2O_3$-(scandium oxide)-stabilized zirconia (ScSZ; a composition of $(Sc_2O_3)_{0.1}(ZrO_2)_{0.89}$).

Further, the electrolyte membrane 20 is formed of $Sc_2O_3$-(scandia)-stabilized zirconia (ScSZ).

In this example, the fabrication of the electrochemical cell 1 was performed in the same manner as in Example 1 except for this difference.

[Example 3]

In Example 3, as illustrated in Table 1, unlike Example 1, in the first hydrogen electrode layer 101, the first oxide is formed of $Sc_2O_3$-(scandium oxide)-stabilized zirconia (ScSZ; a composition of $(Sc_2O_3)_{0.1}(ZrO_2)_{0.89}$).

In this example, the fabrication of the electrochemical cell 1 was performed in the same manner as in Example 1 except for this difference.

[Example 4]

In Example 4, as illustrated in Table 1, unlike Example 1, in the second hydrogen electrode layer 102, the second oxide is formed of $Sm_2O_3$-(samarium oxide)-doped ceria (SDC; a composition of $(Sm_2O_3)_{0.1}(CeO_2)_{0.9}$).

Further, in this example, unlike Example 1, the reaction preventing layer 25 was formed of $Sm_2O_3$-(samarium oxide)-doped ceria (SDC).

In this example, the fabrication of the electrochemical cell 1 was performed in the same manner as in Example 1 except for this difference.

[Example 5]

In Example 5, as illustrated in Table 1, unlike Example 1, in the second hydrogen electrode layer 102, the second oxide is formed of $Y_2O_3$-(yttrium)-doped ceria (YDC; a composition of $(Y_2O_3)_{0.1}(CeO_2)_{0.9}$).

Further, unlike Example 1, the reaction preventing layer 25 was formed of $Sm_2O_3$-(samarium oxide)-doped ceria (SDC).

In this example, the fabrication of the electrochemical cell 1 was performed in the same manner as in Example 1 except for this difference.

[Example 6]

In Example 6, as illustrated in Table 1, unlike Example 1, in the first hydrogen electrode layer 101, the first metal is formed of Cu. Therefore, in this example, the formation of the first hydrogen electrode layer precursor 101a was performed using a powder of an oxide (CuO) of a metal (Cu) forming the first metal.

Further, unlike Example 1, the reaction preventing layer 25 was formed of $Sm_2O_3$-(samarium oxide)-doped ceria (SDC).

In this example, the fabrication of the electrochemical cell 1 was performed in the same manner as in Example 1 except for this difference.

[Example 7]

In Example 7, as illustrated in Table 1, unlike Example 1, in the first hydrogen electrode layer 101, the first oxide is formed of $Ca_2O_3$-(calcium oxide)-stabilized zirconia (CSZ; a composition of $(Ca_2O_3)_{0.08}(ZrO_2)_{0.92}$).

Further, unlike Example 1, the reaction preventing layer 25 was formed of $Sm_2O_3$-(samarium oxide)-doped ceria (SDC).

In this example, the fabrication of the electrochemical cell 1 was performed in the same manner as in Example 1 except for this difference.

[Example 8]

In Example 8, as illustrated in Table 1, unlike Example 1, the thickness T2 of the second hydrogen electrode layer 102 is 100 μm.
Further, in this example, unlike Example 1, the reaction preventing layer 25 was formed of $Sm_2O_3$-(samarium oxide)-doped ceria (SDC).
In this example, the fabrication of the electrochemical cell 1 was performed in the same manner as in Example 1 except for this difference.

[Example 9]

In Example 9, as illustrated in Table 1, unlike Example 1, the thickness T2 of the second hydrogen electrode layer 102 is 20 μm.
Further, in this example, unlike Example 1, the reaction preventing layer 25 was formed of $Sm_2O_3$-(samarium oxide)-doped ceria (SDC).
In this example, the fabrication of the electrochemical cell 1 was performed in the same manner as in Example 1 except for this difference.

[Example 10]

In Example 10, as illustrated in Table 1, unlike Example 1, the thickness T2 of the second hydrogen electrode layer 102 is 15 μm.
Further, in this example, unlike Example 1, the reaction preventing layer 25 was formed of $Sm_2O_3$-(samarium oxide)-doped ceria (SDC).
In this example, the fabrication of the electrochemical cell 1 was performed in the same manner as in Example 1 except for this difference.

[Example 11]

In Example 11, as illustrated in Table 1, unlike Example 1, the thickness T2 of the second hydrogen electrode layer 102 is 120 μm.
Further, in this example, unlike Example 1, the reaction preventing layer 25 was formed of $Sm_2O_3$-(samarium oxide)-doped ceria (SDC).
In this example, the fabrication of the electrochemical cell 1 was performed in the same manner as in Example 1 except for this difference.

[Example C1]

In Example C1, as illustrated in Table 1, unlike Example 1, in the first hydrogen electrode layer 101, the first oxide is formed of $Gd_2O_3$-(gadolinium oxide)-doped ceria (GDC; a composition of $(Gd_2O_3)_{0.1}(CeO_2)_{0.9}$).
In this example, the fabrication of the electrochemical cell 1 was performed in the same manner as in Example 1 except for this difference.

[Example C2]

In Example C2, as illustrated in Table 1, unlike Example 1, in the second hydrogen electrode layer 102, the second oxide is formed of yttria-stabilized zirconia (YSZ).
In this example, the fabrication of the electrochemical cell 1 was performed in the same manner as in Example 1 except for this difference.

[D-2] Test

As illustrated in Table 1, for each of the examples, an initial I-V characteristic evaluation test, a porosity measurement, a fracture strength measurement, and a Young's modulus measurement were performed.

[D-2-1] Initial I-V characteristic evaluation test

The initial I-V characteristic evaluation test was performed using an output characteristic evaluation device. Specifically, the initial IV characteristic evaluation was performed by controlling the water vapor concentration on the hydrogen electrode 10 side and operating the electrochemical cell 1 in the SOFC mode and the SOEC mode. Table 1 illustrates current densities ($A/cm^2$) obtained under the same cell voltage (1.3 V).

As illustrated in Table 1, in Example 1 to Example 11, the current density ($A/cm^2$) is in a range of 0.8 to 0.98 ($A/cm^2$), and in Example C1 and Example C2, the current density ($A/cm^2$) is in a range of 0.8 to 0.96 ($A/cm^2$), which are in the similar range. Specifically, in Example 1 to Example 9, the current density ($A/cm^2$) is almost equal to that of Example C1, and in Example 10 and Example 11, the current density ($A/cm^2$) is almost equal to that of Example C2.

[D-2-2] Porosity measurement

The porosity was measured by a mercury intrusion method. Here, the porosity of the first hydrogen electrode layer precursor 101a formed in each of the examples was measured. The porosity of the first hydrogen electrode layer 101 obtained by reducing the first hydrogen electrode layer precursor 101a is improved by 15% as compared with the first hydrogen electrode layer precursor 101a.

As illustrated in Table 1, Example 1 to Example 11 are almost equal to Example C1 and Example C2 in the porosity.

[D-2-3] Fracture strength and Young's modulus

The fracture strength and the Young's modulus were measured by performing a three-point bending test under the condition of a load applying speed being 0.5 mm/min. Here, the fracture strength and the Young's modulus of the first hydrogen electrode layer precursor 101a formed in each of the examples were measured.

As illustrated in Table 1, Example 1 to Example 11 are higher in the fracture strength and the Young's modulus than Example C1 and Example C2.

[D-3] Summary

[D-3-1]

As illustrated in Table 1, in Example C1 and Example C2, unlike Example 1 to Example 11, the first hydrogen electrode layer 101 and the second hydrogen electrode layer 102 are formed of the same material as each other.

On the other hand, in Example 1 to Example 11, the first hydrogen electrode layer 101 and the second hydrogen electrode layer 102 are formed of the materials different from each other. In Example 1 to Example 11, the first hydrogen electrode layer 101 is formed of the sintered body of the first metal, which is a single metal of at least one element selected from the group consisting of Fe, Co, Ni, and Cu or an alloy of the element, and the first oxide, which is zirconia stabilized with an oxide of at least one element selected from the group consisting of Y, Sc, Ca, and Mg. In addition to this, in Example 1 to Example 11, the second hydrogen electrode layer 102 is formed of the sintered body of the second metal, which is a single metal of at least one element selected from the group consisting of Fe, Co, Ni, and Cu or an alloy of the element, and the second oxide, which is ceria doped with an oxide of at least one element selected from the group consisting of Sm, Gd, and Y.

As a result, in Example 1 to Example 11, the current density ($A/cm^2$) and the porosity were almost equal to those of Example C1 and Example C2, but the fracture strength and the Young's modulus were higher than those of Example C1 and Example C2. As a result, it was found out that Example 1 to Example 11 can sufficiently improve the mechanical reliability as compared with Example C1 and Example C2.

[D-3-2]

In Example 1 to Example 9 out of Example 1 to Example 11, the thickness T1 of the first hydrogen electrode layer 101 and the thickness T2 of the second hydrogen electrode layer 102 satisfy the relationship illustrated in (Expression A) (= $0.05 \leq T2/T1 \leq 0.15$) described above.

Accordingly, there was obtained a result that Example 1 to Example 9 have a higher current density ($A/cm^2$) than Example 10 and Example 11. As a result, it was found out that Example 1 to Example 9 have mechanical reliability equivalent to that of Example 10 and Example 11, and can obtain higher cell performance than Example 10 and

Example 11.

<Others>

While certain embodiments of the present invention have been described, these embodiments have been presented by way of example only, and are not intended to limit the scope of the inventions. Indeed, the novel methods described herein may be embodied in a variety of other forms; furthermore, various omissions, substitutions and changes in the form of the methods described herein may be made without departing from the spirit of the inventions. The accompanying claims and their equivalents are intended to cover such forms or modifications as would fall within the scope and spirit of the inventions.

REFERENCE SIGNS LIST

1: electrochemical cell, 2: separator, 10: hydrogen electrode, 20: electrolyte membrane, 25: reaction preventing layer, 30: oxygen electrode, 101: first hydrogen electrode layer, 101a: first hydrogen electrode layer precursor, 102: second hydrogen electrode layer, 102a: second hydrogen electrode layer precursor, 200: electrochemical cell stack

**Claims**

1. An electrochemical cell, comprising: a hydrogen electrode; an oxygen electrode; and an electrolyte membrane, the electrolyte membrane interposed between the hydrogen electrode and the oxygen electrode, wherein
the hydrogen electrode includes:

    at least a first hydrogen electrode layer; and
    a second hydrogen electrode layer located on the side of the electrolyte membrane relative to the first hydrogen electrode layer,
    the first hydrogen electrode layer is formed of a sintered body of a first metal and a first oxide,
    the second hydrogen electrode layer is formed of a sintered body of a second metal and a second oxide different from the first oxide,
    the first metal and the second metal each are a single metal of at least one element selected from the group consisting of Fe, Co, Ni, and Cu or an alloy of the element,
    the first oxide is zirconia stabilized with an oxide of at least one element selected from the group consisting of Y, Sc, Ca, and Mg, and
    the second oxide is ceria doped with an oxide of at least one element selected from the group consisting of Sm, Gd, and Y.

2. The electrochemical cell according to claim 1, wherein
a thickness T1 of the first hydrogen electrode layer and a thickness T2 of the second hydrogen electrode layer satisfy a relationship illustrated in (Expression A) below.

$$0.05 \leq T2/T1 \leq 0.15 \qquad ...(\text{Expression A})$$

3. An electrochemical cell stack, comprising:

    a plurality of the electrochemical cells according to claim 1 or 2, wherein
    a plurality of the electrochemical cells are stacked.

FIG.1

200

EP 4 108 809 A1

FIG.2

1

EP 4 108 809 A1

## FIG.3A

101a

z

y → x

## FIG.3B

FIRING

20

102a

101a

z

y  x

EP 4 108 809 A1

## FIG.3C

FIRING

25

20

102a

101a

z

y → x

FIG.3D

FIRING

30

25

20

102a

101a

x

z

y

Europäisches
Patentamt

European
Patent Office

Office européen
des brevets

## EUROPEAN SEARCH REPORT

Application Number

EP 22 17 6699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 371 024 A1 (NEXTECH MATERIALS LTD [US]) 5 October 2011 (2011-10-05)<br>* figure 3 *<br>* examples 1,2 *<br>* paragraphs [0005], [0030], [0031], [0034], [0038] *<br>----- | 1-3 | INV.<br>C25B1/04<br>C25B9/23<br>C25B9/77<br>C25B11/031<br>C25B11/047<br>H01M4/86<br>H01M8/12<br>H01M8/2432 |
| X | US 2017/062857 A1 (OHMORI MAKOTO [JP] ET AL) 2 March 2017 (2017-03-02)<br>* paragraphs [0015] – [0018] *<br>----- | 1-3 | ADD.<br>H01M4/88 |
| X | SANDOVAL MÓNICA V ET AL: "Barium-modified NiO-YSZ/NiO-GDC cermet as new anode material for solid oxide fuel cell", SOLID STATE IONICS, vol. 261, 4 May 2014 (2014-05-04), pages 36-44, XP028850792, ISSN: 0167-2738, DOI: 10.1016/J.SSI.2014.04.014<br>* abstract *<br>* page 37, paragraph 2. Experimental Procedure *<br>----- | 1-3 | |
| | | | TECHNICAL FIELDS SEARCHED (IPC) |
| X | KELLOGG I D ET AL: "Solid oxide fuel cell bi-layer anode with gadolinia-doped ceria for utilization of solid carbon fuel", JOURNAL OF POWER SOURCES, ELSEVIER, AMSTERDAM, NL, vol. 195, no. 21, 1 November 2010 (2010-11-01), pages 7238-7242, XP027134883, ISSN: 0378-7753 [retrieved on 2010-06-01]<br>* abstract *<br>* table 1 *<br>----- | 1-3 | C25B<br>H01M |

-/--

The present search report has been drawn up for all claims

| Place of search | Date of completion of the search | Examiner |
|---|---|---|
| Munich | 17 November 2022 | Haering, Christian |

EPO FORM 1503 03.82 (P04C01)

Europäisches
Patentamt

European
Patent Office

Office européen
des brevets

# EUROPEAN SEARCH REPORT

Application Number

EP 22 17 6699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/003565 A1 (SON JI-WON [KR] ET AL) 5 January 2012 (2012-01-05) * claims 1-6 * * paragraphs [0050] – [0052] * ----- | 1-3 | |

TECHNICAL FIELDS
SEARCHED (IPC)

The present search report has been drawn up for all claims

| Place of search | Date of completion of the search | Examiner |
|---|---|---|
| Munich | 17 November 2022 | Haering, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

         .....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 6699

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2022

| Patent document cited in search report | | Publication date | Patent family member(s) | | Publication date |
|---|---|---|---|---|---|
| EP 2371024 | A1 | 05-10-2011 | EP | 2371024 A1 | 05-10-2011 |
| | | | JP | 5608674 B2 | 15-10-2014 |
| | | | JP | 2012511243 A | 17-05-2012 |
| | | | KR | 20110106341 A | 28-09-2011 |
| | | | US | 2010167169 A1 | 01-07-2010 |
| | | | WO | 2010077683 A1 | 08-07-2010 |
| US 2017062857 | A1 | 02-03-2017 | CN | 106463748 A | 22-02-2017 |
| | | | DE | 112015002517 T5 | 02-03-2017 |
| | | | JP | 5770400 B1 | 26-08-2015 |
| | | | JP | 5895108 B1 | 30-03-2016 |
| | | | JP | WO2015182527 A1 | 20-04-2017 |
| | | | US | 2017062857 A1 | 02-03-2017 |
| | | | WO | 2015182527 A1 | 03-12-2015 |
| US 2012003565 | A1 | 05-01-2012 | JP | 5398904 B2 | 29-01-2014 |
| | | | JP | 2012520553 A | 06-09-2012 |
| | | | US | 2012003565 A1 | 05-01-2012 |
| | | | WO | 2010107228 A2 | 23-09-2010 |

EPO FORM P0459

For more details about this annex : see Official Journal of the European Patent Office, No. 12/82